# EUROPÄISCHE PATENTANMELDUNG

(11) **EP 4 670 507 A1**
(43) Veröffentlichungstag der Anmeldung: **31.12.2025**
(21) Anmeldenummer: 24185051.0
(22) Anmeldetag: 27.06.2024
(51) Int. Cl.: A01P 7/04, A01N 25/12, A01N 25/22, A01N 57/12

(54) **VERFAHREN ZUR BEKÄMPFUNG VON RÜSSELKÄFERBEFÄLLEN ODER ZUR VERHINDERUNG DERSELBEN**

(71) Anmelder: Agrana Beteiligungs- Aktiengesellschaft, 1020 Wien (AT)
(72) Erfinder: SEITER, Marion, 3430 Tulln (AT); WASTYN, Marnik Michel, 2320 Schwechat (AT)
(74) Vertreter: SONN Patentanwälte GmbH & Co KG

(57) **Zusammenfassung**

Die vorliegende Erfindung betrifft ein Verfahren zur Bekämpfung eines Rüsselkäferbefalls, insbesondere eines Rübenderbrüsslerbefalls, bei der landwirtschaftlichen Produktion von Nutzpflanzen, wobei
(i) entweder eine Zusammensetzung, die ein oder mehrere Arten von Nukleinsäuremolekülen, insbesondere von Interferenz-RNA- (RNAi-)Molekülen, die den Stoffwechsel, die Entwicklung, Fortpflanzungsfähigkeit oder Überlebensfähigkeit von Rüsselkäfern (Curculionidae), insbesondere von Rübenderbrüsslern (Zuckerrübenrüssler; *Asproparthenis punctiventris),* inhibieren, auf eine landwirtschaftliche Nutzfläche aufgebracht wird; oder
(ii) eine Zusammensetzung, die ein oder mehrere Arten von Nukleinsäuremolekülen, insbesondere von RNAi-Molekülen, die den Stoffwechsel, die Entwicklung, Fortpflanzungsfähigkeit oder Überlebensfähigkeit von Rüsselkäfern inhibieren, auf Fangpflanzenstreifen am Rand der, in der und/oder rund um die landwirtschaftliche Nutzfläche aufgebracht wird, wobei diese Fangpflanzenstreifen mit einer Fangpflanzendichtsaat von zumindest 50 Pflanzen/m² bepflanzt sind; so dass die Rüsselkäfer, insbesondere die Rübenderbrüssler, mit den Nukleinsäuremolekülen, insbesondere den RNAi-Molekülen, in Kontakt kommen, so dass die Entwicklung, Fortpflanzungsfähigkeit oder Überlebensfähigkeit der Rüsselkäfer inhibiert wird.

## Beschreibung

Die vorliegende Erfindung betrifft ein Verfahren zur Bekämpfung von Rübenderbrüssler-Befällen, insbesondere die Bekämpfung des Zuckerrübenderbrüsslers (Rübenderbrüssler; *Asproparthenis punctiventris,* vormals *Bothynoderes punctiventris),* vor allem in Zusammenhang mit der landwirtschaftlichen Produktion von Zuckerrüben *(Beta vulgaris ssp. vulgaris*).

Rüsselkäfer, insbesondere aus der Familie der Curculionidae (Rüsselkäfer "im engeren Sinne"), stellen eine bedeutende Bedrohung für Nutzpflanzen wie Getreide, Hülsenfrüchte, Obstbäume und Zierpflanzen dar. Die Auswirkungen dieser Plagen sind weitreichend und können zu erheblichen Ernteverlusten und wirtschaftlichen Einbußen führen. In der Zuckerrübenproduktion richtet der Rübenderbrüssler gebietsweise massive Schäden an. Vor allem in Zentral-, Süd-, Südost- und Osteuropa sowie auch in Zentralasien zählt der Rübenderbrüssler zu den wirtschaftlich bedeutendsten Schädlingen. Die Gefahr von totalen Ernteausfällen ist vor allem in den Ebenen des nordöstlichen Österreich besonders hoch. Geringe Niederschläge und hohe Durchschnittstemperaturen in den Monaten April bis Juni begünstigen die Entwicklung des Rübenderbrüsslers.

Die Bekämpfung des Rübenderbrüsslers ist ein wesentlicher Aspekt der Ertragssicherung. Eine Kombination verschiedener Bekämpfungsmethoden und Techniken, einschließlich chemischer, biologischer und kulturtechnischer muss derzeit angewendet werden, um die Population zu unterdrücken. Auch wenn alle zur Verfügung stehenden Bekämpfungs-Maßnahmen angewendet werden, ist es nicht immer möglich den Kulturpflanzenbestand zu sichern.
1. Chemische Bekämpfungsmethoden:
   Der Einsatz von Insektiziden stellt eine Methode zur Bekämpfung des Rübenderbrüsslers in Zuckerrübenfeldern dar. Chemisch synthetisch Insektizide werden entweder als Beize direkt am Saatkorn und/oder als Sprühapplikation während des Wachstumszyklus angewendet. Diese Insektizid-Gruppe wirkt v.a. als Kontaktmittel, d.h. der Schädling muss getroffen werden. Witterungseinflüsse sowie Vibrationen verursachen die Migration des Käfers in die obersten Erdschichten, was wiederum den Einsatz von Kontaktinsektiziden erschwert. Der Käfer muss direkt vom Insektizid getroffen werden, um die Population unter der Schadschwelle zu halten (Eigner et al. 2020, 77th. Brüssel (IIRC Congress); https://www.iirb.org/fileadmin/IIRB/Congresses/77th_IIRB_Congress/3_Buch_Abstract_brochure_20 20_final.pdf). Bei wiederholtem Einsatz besteht jedoch die Gefahr der Resistenzbildung. Diese Gefahr kann derzeitig kaum vermieden werden, da keine Wirkstoff-Alternative zur Verfügung steht. Der Behandlungszeitpunkt richtet sich nach der Aktivität des Käfers und der Witterung; bei hohen Temperaturen wird üblicherweise gegen Abend oder morgens behandelt. Bei geringen Befallsdichten des Rübenderbrüsslers zeigten neonicotinoide Beizen gute Ergebnisse. Die Verwendung von Neonicotinoiden ist seit 2018 in der EU verboten, jedoch wurden in den vergangenen starken Befallsjahren in einzelnen Bundesländern Notfallzulassungen für den Zuckerrübenbau erteilt. Bei hohen Befallsdichten ist die Beizung allerdings auch nicht ausreichend. Seit 2023 stehen Wirkstoffe aus der Gruppe der Neonicotinoide nichtmehr als Beize zur Verfügung.
2. Biologische und physikalische Kontrollmethoden:
   Biologische Kontrollmethoden umfassen den Einsatz natürlicher Feinde und Parasiten, um die Rüsselkäferpopulation zu regulieren. Ein Beispiel hierfür sind bestimmte Nematodenarten, die als Parasiten in die Larven der Rüsselkäfer eindringen und diese abtöten können (Drmic et al., J. Centr. Europ. Agric. 21 (2020), 649-656; Zottele et al., Pathogens 12 (2023), 90). Eine effektive Wirkung konnte aber bislang im Feld nicht nachgewiesen werden. Zur Bekämpfung des Rübenderbrüsslers (Asproparthenis punctiventris) stehen keine zugelassenen Nematoden-Präparate zur Verfügung. Zwar können auch einige Vogelarten und Laufkäfer als natürliche Feinde von Rüsselkäfern fungieren aber nicht ausreichend zur Regulierung ihrer Populationen beitragen. Der Einsatz biologischer Methoden erfordert immer eine sorgfältige Planung und Implementierung, um einen Effekt sicherzustellen. Zu den physikalisch Abwehrmethoden zählt das Ziehen von Fallrillen. Zum einen in den Beständen nach Zuckerrübe (= Vorjahresfläche) um die Auswanderung zu blockieren, sowie in den aktuellen Zuckerrübenflächen um die Einwanderung in den jungen Rübenbestand zu unterbinden. Zusätzlich werden sowohl Altflächen als auch Neuflächen mit Lockstofffallen bestückt, um die Anzahl der auswandernden Käfer zu reduzieren. Bei sehr starkem Auftreten sollte der Abstand der Pheromonfallen dabei auf bis zu 10 m reduziert werden. Der Einsatz von Fallen mit Lockstoffködern (z.b. Pheromonen) in Vorjahresflächen kann zu einer deutlichen Entlastung der Neubestände führen. Ein Vergleich der Unterschiede im Verhalten zwischen begatteten Weibchen während der Eiablage und unverpaarten Weibchen während der Reifungsfütterung im Labor zeigte, dass - unabhängig vom Paarungsstatus - die Weibchen die Nahrungspflanzen anhand des Geruches fanden. Unbegattete Weibchen nehmen aufgrund ihres Reifungsfraßes die größte Menge an Blattmasse von *Beta vulgaris spp.* auf. Verpaarte Weibchen verzehrten im Allgemeinen mehr Blattmasse als unverpaarte, insbesondere von Pflanzen mit einem geringeren Nährwert. Die Larven ernähren und entwickeln sich nicht nur an Zuckerrübenwurzeln, sondern auch an Unkräutern und anderen Pflanzen, z.B. aus der Familie der *Amaranthaceae.*
3. Kulturelle Maßnahmen:
   Kulturelle Maßnahmen zielen darauf ab, das Auftreten des Rübenderbrüsslers in schädlichem Maße, durch die Manipulation von Umweltbedingungen und Anbaupraktiken zu reduzieren. Dazu gehören Maßnahmen wie Fruchtwechsel, Bodenbearbeitungstechniken, frühe Saat und Förderung der Jugendentwicklung. Weiters ist empfehlenswert, die Rüben nicht direkt neben vorjährigen Rübenfeldern anzulegen. Die ersten Bekämpfungsmaßnahmen im Jahreszyklus müssen in den Altbeständen (Folgefrucht zur Zuckerrübe) getroffen werden, da dort die Eiablage und die Entwicklung der Käfer im Boden stattgefunden hat.

Mechanische Bodenbearbeitung im Herbst nach der Ernte befördert die Puppenwiegen und die in ihren Erdkammern entwickelten Käfer an die Erdoberfläche. Dieser Vorgang kann u.U. die Wiegen zerstören und zu einer Reduktion der Population beitragen. Wichtig ist, die Migration der Käfer von den Altbeständen auf die neuen Felder so gut wie möglich zu unterbinden. Eine - bislang nur theoretische - Möglichkeit den Käfer von der Zuckerrübe abzulenken, ist die Pflanzung von Ersatzfutterpflanzen (Catch-Crops) rund um die Rübenflächen. Das System der Fangpflanzen basiert auf der Idee, die Schädlinge in einer für sie attraktiven Futterpflanze zu akkumulieren um sie dort gezielt unschädlich machen zu können.

Nach derzeitigem Wissensstand müssen eine Reihe an Maßnahmen gesetzt werden, um die Zuckerrüben vor dem Fraß des Rübenderbrüsslers zu schützen und somit eine maximale Ernte zu gewährleisten, die sich (mehr oder weniger) über die gesamte Vegetationsperiode erstrecken: Die erste Bekämpfungsaktion zielt auf die Jungkäfer in den Vorjahresrübenflächen ab. Aus diesen Flächen, im Regelfall Winterweizenflächen, wandern die Schädling in die jungen Rübenflächen ein. Beide Geschlechter lokalisieren ihre Nahrungspflanzen anhand des Duftes bzw. des Aromas (des "Duftbouquets") ihrer Blätter.

Um so viele Käfer wie möglich vor der Zuwanderung zu hindern, werden die Alt-Rübenflächen mit Aggregationsfallen (Lockstoff: Grandlure III-IV) umsäumt. Im Optimalfall können bis zu 25% der zuwanderwilligen Schädlinge abgefangen werden. Am Rübenschlag selbst werden ebensolche Aggregationsfallen rund um die Rübenflächen ausgebracht, um die Zuwanderung zu unterbinden. Die erste Bekämpfungsmaßnahme wird dort mit der Beize gesetzt. Durch den Wirkstoff Flupyradifuron, der sich systemisch im Pflanzensaft verteilt, sind die Zuckerrübenpflanzen kurze Zeit mehr oder weniger geschützt. Folgend werden entsprechend des Schädlingsdruckes zugelassene Insektizide (Pyrethroid) breitflächig auf den Rübenbestand appliziert. Dies ist in Österreich bis zu drei Mal möglich. Durch die Akkumulation dieser Maßnahmen können die Habitatbedingungen für Rübenderbrüssler verschlechtert werden. Der Erfolg aller Maßnahmen hängt stark von Bodentemperatur und Niederschlag ab. Ein feuchter und kühler Frühling führt zu einem verzettelten Auftreten des Schädlings, was die Effektivität aller Maßnahmen unterstützt. Bei heißen und trockenen Bedingungen hingegen reicht auch die gleichzeitige Anwendung aller möglichen Maßnahmen nicht aus, um die Population zu unterdrücken.

Derzeitige Methoden zur Bekämpfung des Rübenderbrüsslers sind häufig ineffizient, kostenintensiv und können negative Auswirkungen auf die Umwelt haben, insbesondere, wenn sie ausschließlich auf Basis chemischer Bekämpfungsmethoden aufgebaut sind.

Obwohl durch die oben beschriebenen Ansätze bei geringer Befallsdichte einige Erfolge verzeichnet werden konnten, bleiben sie oft unzureichend.

Insgesamt erfordert die Bekämpfung von Rüsselkäferbefällen auf Zuckerrübenfeldern einen integrierten Ansatz, der verschiedene Bekämpfungsmethoden kombiniert und auf die spezifischen Bedingungen des Anbaugebiets und die Dynamik der Rüsselkäferpopulationen abgestimmt ist. Die Herausforderung besteht darin, effektive und nachhaltige Strategien zu entwickeln, die die Schädigung von Zuckerrüben durch Rüsselkäfer erheblich minimieren und gleichzeitig Umweltauswirkungen reduzieren.

Die Aufgabe der vorliegenden Erfindung ist daher, ein effizientes und spezifisches Verfahren zur Bekämpfung eines Rüsselkäferbefalls, insbesondere eines Rübenderbrüsslerbefalls, bei der landwirtschaftlichen Produktion von Nutzpflanzen, für die ein Risiko einer Rüsselkäferplage besteht, insbesondere bei der landwirtschaftlichen Produktion von Zuckerrüben, für die ein Risiko eines Rübenderbrüssler-Befalls besteht, zur Verfügung zu stellen. Dieses Verfahren sollte bevorzugt mit an sich bekannten Maßnahmen zur Bekämpfung derartiger Plagen kombiniert werden können, nachhaltig und umweltschonend sein. Dabei sollen möglichst andere Tiere und Pflanzen nicht beeinträchtigt werden, insbesondere soll es nicht zur Schädigung von Nützlingen kommen. Bevorzugte Aufgaben sind das Zurverfügungstellen von Verfahren, die hinsichtlich ihrer Wirksamkeit, Umweltverträglichkeit und Wirtschaftlichkeit den bekannten Verfahren überlegen sind.

Daher betrifft die vorliegende Erfindung ein Verfahren zur Bekämpfung eines Rüsselkäferbefalls, insbesondere eines Rübenderbrüsslerbefalles, bei der landwirtschaftlichen Produktion von Nutzpflanzen, vorzugsweise für Nutzpflanzen, für die ein Risiko einer Rüsselkäferbefalles besteht, insbesondere bei der landwirtschaftlichen Produktion von Zuckerrüben (*Beta vulgaris ssp. vulgaris*), für die ein Risiko einer Rübenderbrüsslerplage besteht, wobei (i) entweder eine Zusammensetzung, die ein oder mehrere Arten von Nukleinsäuremolekülen, insbesondere von Interferenz-RNA- (RNAi-)Molekülen, die den Stoffwechsel, die Entwicklung, Fortpflanzung oder Überlebensfähigkeit von Rüsselkäfern (Curculionidae), insbesondere von Rübenderbrüsslern (Zuckerrübenrüssler; *Asproparthenis punctiventris*), inhibieren, auf eine landwirtschaftliche Nutzfläche, insbesondere auf eine Vorjahresrübenfläche, aufgebracht wird; oder (ii) eine Zusammensetzung, die ein oder mehrere Arten von Nukleinsäuremolekülen, insbesondere von RNAi-Molekülen, die den Stoffwechsel, die Entwicklung, Fortpflanzung oder Überlebensfähigkeit von Rüsselkäfern inhibieren, auf Fangpflanzenstreifen am Rand der oder rund um die landwirtschaftliche Nutzfläche, insbesondere am Rand der oder rund um die Vorjahresrübenfläche, aufgebracht wird, wobei diese Fangpflanzenstreifen mit einer Fangpflanzendichtsaat von zumindest 50 Pflanzen/m² bepflanzt sind;
so dass die Rüsselkäfer, insbesondere die Rübenderbrüssler, mit den Nukleinsäuremolekülen, insbesondere den RNAi-Molekülen, in Kontakt kommen, so dass die Entwicklung, Fortpflanzung oder Überlebensfähigkeit der Rüsselkäfer inhibiert wird.

Bevorzugte Rüsselkäfer, die - neben dem Rübenderbrüssler - zur erfindungsgemäßen Bekämpfung besonders geeignet sind, sind der Große Rapsstängelrüssler (*Ceutorrhynchus napus*) und der Gefleckte Kohltriebrüssler (*Ceutorrhynchus pallidactylus*)*,* die von besonderer Bedeutung als Pflanzenschädlinge in Raps sind.

Mit der vorliegenden Erfindung wird eine innovative Methode zur Verfügung gestellt, die keine oder zumindest keine erheblichen Schäden in landwirtschaftlichen und ökologischen Systemen verursacht, und mit der ein Rüsselkäferbefall, insbesondere ein Rübenderbrüsslerbefall, effizient und spezifisch bekämpft oder verhindert werden kann, jedenfalls in dem Umfang, dass sich der Befall nicht in eine Plage ausweitet. Das erfindungsgemäße Verfahren hat daher deutliche Vorteile in der Wirksamkeit, Umweltverträglichkeit und Wirtschaftlichkeit gegenüber den im Stand der Technik bekannten Verfahren.

Das erfindungsgemäße Verfahren stellt auch eine landwirtschaftliche Strategie dar, die ohne die genetische Transformation der Nutzpflanze erfolgt und bewahrt so die Naturbelassenheit der Nutzpflanze. Die vorliegende Erfindung stellt daher eine Methodik dar, die ohne gentechnische Modifikation der Pflanze auskommt, bzw. ohne langwierige Züchtung von Resistenzen in der Pflanze auskommt und damit besonders konsumentenfreundlich ist. Ein derartiges Verfahren ist jedoch in der Praxis eine Herausforderung, da eben gezielt der Schädling bekämpft werden muss (indem er mit der Nukleinsäure in Kontakt gebracht werden muss oder diese sogar aufnehmen muss), wohingegen bei einer transformierten Pflanze gewartet werden kann, bis der Schädling auftritt, da das aktive Agens nicht durch Umwelteinflüsse (Wind, Regen) von der Pflanze abgewaschen werden kann und somit möglicherweise gar nicht mehr gegen den Käfer wirken kann. Erfindungsgemäß hat sich aber überraschenderweise gezeigt, dass sich mit der Strategie gemäß der vorliegenden Erfindung ein Rüsselkäferbefall trotzdem effizient verhindern oder abmildern lassen kann, insbesondere wenn der Zeitpunkt der Aufbringung der Zusammensetzung und die Bepflanzung des Fangstreifens mit dem Lebenszyklus des Käfers koordiniert wird (s. unten). Dieser Umstand liefert auch den erfindungsgemäßen Vorteil, dass der Einsatz nicht am Rübenfeld selbst (räumlich) limitiert ist, sondern auch außerhalb des Feldes eingesetzt werden kann, und somit der Einsatz nicht zwingend mit der Schädigung der Rübenpflanzen (durch Fraß) einhergeht.

Das erfindungsgemäße Verfahren bietet somit einen neuartigen Ansatz zur Rüsselkäferbekämpfung, der auf fortschrittlichen Technologien und biologischen Prinzipien beruht. Durch die Kombination von präziser Sensorik, die vorteilhafter Weise im Rahmen einer teilflächenspezifischen oder einer spot-spraying Applikation, z.B. mittels GPS erfolgen kann, künstlicher Intelligenz, die ausgehend von einem neuronalen Netzwerk die Schädlinge und den Fraßschaden erkennt und daraufhin eine Applikation auslöst und gezielter Intervention wird eine effiziente und umweltverträgliche Methode entwickelt, um Rüsselkäferpopulationen zu kontrollieren und potenzielle Schäden an landwirtschaftlichen Kulturen zu minimieren.

Insbesondere der erfindungsgemäße Ansatz über eine Fangpflanzenkultur ist eine effiziente Variante, die nur einen minimalen Einsatz an Nukleinsäuremolekülen und anderen chemischen und biologischen Bekämpfungsmittel erfordert und somit die Umwelt insgesamt, aber im Speziellen auch die zu gewinnende Nutzpflanze, insbesondere die Zuckerrübe, schont und nicht oder nur wenig mit den Pflanzenschutzmitteln in Kontakt bringt. Bei der Applikation auf Fangpflanzen muss somit kein Rübenpflänzchen durch Fraß geschädigt werden, um Wirkung zu erzielen, sondern diese Aufgabe wird von der Fangpflanze übernommen, und ermöglicht bestenfalls ein unbeschädigtes Rübenfeld. Durch den Fangpflanzeneinsatz wird des Weiteren die Anzahl der Überfahren reduziert, wodurch geringere CO₂-Emissionen ausgeschieden werden.

Die vorliegende Erfindung betrifft auch ein Verfahren zur Bekämpfung eines Rüsselkäferbefalls bei der landwirtschaftlichen Produktion von Nutzpflanzen, für die ein Risiko eines Rüsselkäferbefalls besteht, wobei eine Zusammensetzung, die ein oder mehrere Arten von Nukleinsäuremolekülen, die den Stoffwechsel, die Entwicklung, Fortpflanzungsfähigkeit oder Überlebensfähigkeit von Rüsselkäfern (Curculionidae) inhibieren,
(i) auf eine landwirtschaftliche Nutzfläche aufgebracht wird; und/oder
(ii) auf Fangpflanzenstreifen am Rand der, in der und/oder rund um die landwirtschaftliche Nutzfläche aufgebracht wird;
so dass die Rüsselkäfer mit den Nukleinsäuremolekülen in Kontakt kommen, so dass die Entwicklung, Fortpflanzungsfähigkeit oder Überlebensfähigkeit der Rüsselkäfer inhibiert wird.

Vorzugsweise ist der Rüsselkäferbefall ein Rübenderbrüssler-(Zuckerrübenrüssler; *Asproparthenis punctiven tris*)-befall*.*

Gemäß einer bevorzugten Ausführungsform der vorliegenden Erfindung ist die landwirtschaftliche Produktion von Nutzpflanzen eine landwirtschaftliche Produktion von Zuckerrüben (Beta vulgaris ssp. vulgaris) ist), für die ein Risiko eines Rübenderbrüsslerbefalls besteht. Erfindungsgemäß besonders bevorzugte Nukleinsäuremoleküle sind Interferenz-RNA-(RNAi-)Moleküle.

Vorzugsweise handelt es sich bei der landwirtschaftlichen Nutzfläche um eine Vorjahresrübenfläche, insbesondere um eine Vorjahrsrübenfläche, die im jeweiligen Vorjahr bereits einen Käferbefall aufgewiesen hat.

Bevorzugterweise ist der Fangpflanzenstreifen mit einer Fangpflanzendichtsaat bepflanzt. Je dichter die Fangpflanzenstreifen mit Fangpflanzen bepflanzt sind, desto größer ist die Fangwirkung. Je nach Fangpflanze sind die Fangpflanzenstreifen mit zumindest einer Fangpflanze (insbesondere, wenn es sich um einen Fangpflanzenstrauch handelt), bevorzugt zumindest 5 Fangpflanzen/m², vorzugsweise zumindest 10 Fangpflanzen/m², noch bevorzugter zumindest 20 Fangpflanzen/m², insbesondere zumindest 50 Fangpflanzen/m², bepflanzt. Dabei ist das Anlegen des Fangpflanzenstreifens erfindungsgemäß bevorzugt als aktives Anlegen ("Bepflanzung") der Fangpflanzenstreifen mit den Fangpflanzen ausgeführt. Zwar sind auch bereits etablierte Fangpflanzen geeignet, eine gewisse Fangwirkung zu erzielen, jedoch kann mit einer gezielten, auch quantitativ geplanten Bepflanzung dem Befallsrisiko besser entgegengetreten werden, wobei hierfür insbesondere in Erwägung gezogen werden kann, die Art und Dichte der Bepflanzung des Fangstreifens als auch die Menge der aufgebrachten Zusammensetzung vom Umfang des Vorjahresbefalls abhängig zu machen. Hat es auf der landwirtschaftlichen Nutzfläche oder in der Nähe dieser Nutzfläche bereits einen Vorjahresbefall gegeben, so ist die eingesetzte Menge an Fangpflanzen und/oder erfindungsgemäßer Zusammensetzung entsprechend höher anzusetzen als wenn kein Vorjahresbefall erfolgt ist. Eine effiziente Aufbringung der erfindungsgemäßen Zusammensetzung ist alleine schon aufgrund der Kosten zur Herstellung der erfindungsgemäßen Nukleinsäure-Zusammensetzung geboten, ebenso das Zusammenspiel mit an sich bekannten Methoden zur Kontrolle von Russelkäferbefällen.

Auch die Platzierung, der Umfang und die Größe (samt Bepflanzungsdichte) der Fangpflanzenstreifen kann von derartigen Randbedingungen ausgewählt werden. Der Ausdruck "Fangpflanzenstreifen" ist dabei erfindungsgemäß nicht auf eine bestimmte Fläche oder Flächenform festgelegt, ein erfindungsgemäßer Fangpflanzenstreifen kann auch, z.B. als viereckiges oder kreisförmiges Feld, innerhalb oder am Rand der landwirtschaftlichen Nutzfläche vorgesehen werden. Ein langgezogenes Rechteck, dass sich entlang des Randes einer (in der Regel ebenfalls viereckigen) landwirtschaftlichen Nutzfläche erstreckt, ist jedoch die bevorzugte Ausführungsform für einen Fangstreifen.

Das erfindungsgemäße Aufbringen der Nukleinsäuremolekül-hältigen Zusammensetzung kann vollflächig oder nicht vollflächig erfolgen. Beispielsweise kann das Aufbringen nur am Rand der landwirtschaftlichen Nutzfläche erfolgen, insbesondere wenn die Aufbringung auf landwirtschaftlichen Nutzflächen erfolgt, die im jeweiligen Vorjahr nicht befallen waren, die also allenfalls erst durch eine Einwanderung von Käfern aus Nachbarsfeldern gefährdet sind. Gemäß einer bevorzugten Ausführungsform erfolgt das Aufbringen auf einem bedeutender Teil der landwirtschaftlichen Nutzfläche, z.B. auf 30 % oder mehr der Nutzfläche (insbesondere der Vorjahresfläche), insbesondere auf 50 % mehr der Nutzfläche (insbesondere der Vorjahresfläche), oder z.B. nur auf der der Seite oder dem Teil des Feldes, auf der der Befall zu erwarten ist. Vorzugsweise werden die Fangpflanzen zumindest in einer Pflanzenreihe, bevorzugt in zumindest drei Pflanzenreihen, besonders bevorzugt zumindest fünf Pflanzenreihen vorgesehen, insbesondere, wenn die Fangpflanzen am Rand der landwirtschaftlichen Nutzfläche vorgesehen werden. Mit Rand kann der gesamten Rand der landwirtschaftlichen Nutzfläche (z.B. des Rübenfeldes) verstanden werden; es kann aber in besonderen Fällen auch nur eine Seite am Rand der landwirtschaftlichen Nutzfläche mit den Fangpflanzen versehen werden (oder die Nukleinsäure-Zusammensetzungen aufgebracht werden), wenn z.B. der Befall nur von einer Seite erwartet wird. Diese speziellen Ausführungen sollen einen besonders ökonomischen und umweltschonenden Einsatz der Maßnahme ermöglichen.

Die erfindungsgemäße Aufbringung der Zusammensetzung erfolgt bevorzugt als Spray, insbesondere als Spray, der mit herkömmlichen landwirtschaftlichen Aufbringungsmitteln aufgebracht werden kann. Diese bevorzugte Ausführungsform ist besonders praktisch interessant, da hierzu kein besonderes Equipment angeschafft werden muss.

Die erfindungsgemäße Zusammensetzung kann noch weitere Bestandteile umfassen. Besonders bevorzugt sind dabei Stoffe, die die Käfer besonders anlocken. Ziel der vorliegenden Erfindung ist, dass die Käfer durch Verzehr der Nukleinsäure inhibiert werden. Demgemäß ist das Vorsehen von Aggregationslockstoffen und/oder Sexuallockstoffen, insbesondere Pheromonen, besonders bevorzugt. Diese können zusammen oder getrennt mit der Nukleinsäure-Zusammensetzung aufgebracht werden. Gemäß einer bevorzugten Ausführungsform umfasst das Nukleinsäuremolekül ein Polynukleotid, das eine Rüsselkäfer-RNAi, insbesondere eine Rübenderbrüssler-RNAi, ist, mit welcher eine dazugehörige mRNA des Rüsselkäfers, insbesondere des Rübenderbrüsslers, abgebaut wird oder deren Translation blockiert wird. Vorzugsweise umfasst das Nukleinsäuremolekül ein Polynukleotid, das eine Rüsselkäfer-RNAi, insbesondere eine Rübenderbrüssler-RNAi, ist, die gegen das Chitin-Synthase-Gen, gegen ein Verdauungsenzym im Rüsselkäfer, insbesondere im Rübenderbrüssler, oder gegen Gene des Rüsselkäfers, insbesondere des Rübenderbrüsslers, sind, die an den Entgiftungs- und Abwehrmechanismen des Rüsselkäfers, insbesondere des Rübenderbrüsslers, beteiligt sind.

Besonders bevorzugte Nukleinsäuren, die erfindungsgemäß eingesetzt werden können sind dabei die Proteasom-Untereinheit beta Typ-5 mRNA (diese blockiert den intrazellulären Substrat (Protein)-Abbau), die β-(beta)-Actin mRNA (steuert Zellwachstum und -migration), die Mesh (dvssj2) mRNA (Protein der glatten septalen Verbindung, welches wichtig für die strukturelle Integrität des Mitteldarmepithels ist), die α (alpha) COP mRNA (eine Untereinheit des Coatomer-Protein-Komplexes-I (COPI); beteiligt am intrazellulären vesikulären Transport von Proteinen) oder Kombination (Co-Targeting) dieser Gene (oder - ganz allgemein - die Kombination von zwei Genen gleichzeitig; wobei vorzugsweise zumindest eine der vier hier konkret genannten mRNAs zum Einsatz kommt.

Die erfindungsgemäße Bekämpfung von Rüsselkäfern im Allgemeinen und insbesondere des Rübenderbrüsslers mittels inhibierender Nukleinsäuren, insbesondere mittels RNAi-Molekülen, ist ein vielversprechender Ansatz, der auf den und Molekularbiologie basiert. RNAi ist ein natürlicher Prozess, bei dem mRNA Moleküle durch RNAi ,neutralisiert' und degradiert werden, wodurch die Translation gehemmt wird. Dieser Mechanismus kann gezielt genutzt werden, um die Expression von Genen in Rüsselkäfern, insbesondere in Rübenderbrüsslern, zu beeinflussen, die für ihre Entwicklung, Fortpflanzung oder Überlebensfähigkeit wesentlich sind.

Die Umsetzung von RNAi zur Bekämpfung von Rüsselkäfern, insbesondere von Rübenderbrüsslern, erfolgt in der Regel in mehreren Schritten:
1. Identifizierung geeigneter Zielgene:
   Zunächst werden spezifische Gene in Rüsselkäfern, insbesondere in Rübenderbrüsslern, identifiziert, deren Unterdrückung dazu führen könnte, dass die Käfer sterben oder ihre Fortpflanzungsfähigkeit beeinträchtigt wird. Diese Gene könnten beispielsweise für lebenswichtige Stoffwechselprozesse, die Entwicklung von Organen oder die Produktion von Proteinen verantwortlich sein, die für das Überleben der Käfer wesentlich sind.
2. Design und Herstellung von RNAi-Wirkstoffen:
   Basierend auf den identifizierten Zielgenen werden spezifische RNAi-Wirkstoffe entwickelt, die die Expression dieser Gene in den Rüsselkäfern, insbesondere in Rübenderbrüsslern, gezielt reduzieren oder unterdrücken können. Diese RNAi-Wirkstoffe bestehen in der Regel aus doppelsträngigen RNA-Molekülen (dsRNA), die spezifisch an die Ziel-mRNA der Gene binden und deren Abbau oder Translation inhibieren Evtl. Stabilisierungsverfahren für den entwickelten RNAi-Wirkstoff erwähnen, die eine Langzeitstabilität der RNAi-Zusammensetzung bis zur Applikation ermöglichen. Für die Formulierung und zur Stabilisierung von dsRNA haben sich kationische Liposome, Nanopartikel aus Chitosan, Natriumtripolyphosphat, Quantenpunkte und Siliziumdioxid-Nanopartikel bewährt.
   Besonders bevorzugt für Transportverfahren, mit denen die Nukleinsäure erfindungsgemäß in die Rüsselkäfer, insbesondere in die Rübenderbrüssler eingebracht werden können sind die folgenden nicht-transgenen Verabreichungstechnologien:
   i) Polymer- oder liposomische Nanopartikel: Diese Technologien könnten dazu beitragen, dsRNA-Moleküle effizienter an Schadinsekten zu liefern.
   ii) Peptidbasierte Zustellfahrzeuge: Peptide könnten als Träger für dsRNA dienen und die gezielte Zustellung an Schadinsekten ermöglichen.
   iii) Virusähnliche Partikel: Diese könnten ebenfalls als Zustellfahrzeuge dienen und die Effizienz von RNAi verbessern.
3. Applikation der RNAi-Wirkstoffe:
   Die RNAi-Wirkstoffe werden auf die Rüsselkäfer, insbesondere auf die Rübenderbrüsslern, appliziert, entweder durch die Verwendung von dsRNA-haltigen Sprays auf Pflanzen oder anderen Oberflächen, die von den Käfern besiedelt werden. Die dsRNA gelangt in die Zellen der Rüsselkäfer, wo sie mit der Ziel-mRNA interagiert und deren Abbau auslöst oder die Translation hindert, was letztendlich zur Unterdrückung der Proteinsynthese führt.
4. Überwachung der Wirksamkeit und Sicherheit:
   Die Wirksamkeit und Sicherheit des RNAi-basierten Ansatzes zur Bekämpfung von Rüsselkäfern, insbesondere von Rübenderbrüsslern, kann sorgfältig überwacht und bewertet werden. Dies umfasst die Beurteilung der Auswirkungen auf die Zielkäferpopulationen sowie mögliche nicht beabsichtigte Auswirkungen auf andere Organismen und die Umwelt.

RNAi-basierte Methoden zur Bekämpfung von Rüsselkäfern, insbesondere von Rübenderbrüsslern, zeigten bislang schon vielversprechende Ergebnisse in Laborstudien. Mit der vorliegenden Erfindung wird nun erstmal ein praktisch realisiertes Konzept für ein Verfahren vorgestellt, das eine wichtige Rolle bei der Entwicklung nachhaltiger und umweltverträglicher Strategien zur Schädlingsbekämpfung spielt, weil es eine ausreichende Effektivität, Sicherheit und praktische Anwendbarkeit dieser Technologie bei gleichzeitiger Wirtschaftlichkeit ermöglicht. Im Vergleich zum Einsatz chemisch-synthetischer Pflanzenschutzmittel weist die RNAi-Technologie entscheidende Vorteile auf: eine sehr selektive Wirkung auf Basis eines natürlichen Mechanismus; eine kurze Verweildauer (z.B. vollkommener Abbau nach rund 3 Tagen). in der Umwelt und die Möglichkeit, gegebenenfalls verschiedener Ziele in ein und demselben Schädling oder sogar in verschiedenen Schädlingen zu kombinieren.

Insbesondere wurden spezifische RNAi-Moleküle identifiziert und getestet, die potenziell zur Bekämpfung von Rüsselkäfern, insbesondere von Rübenderbrüsslern, verwendet werden können, z.B. die Proteasom-Untereinheit beta Typ-5 mRNA, die β-(beta)-Actin, die Mesh (dvssj2) mRNA, die α (alpha) COP mRNA oder die Kombination (Co-Targeting) von zumindest zwei Genen gleichzeitig; wobei insbesondere zumindest eine der vier hier konkret genannten mRNAs zum Einsatz kommt.

RNAi gegen das Chitin-Synthase-Gen: Chitin ist ein wesentlicher Bestandteil des Exoskeletts von Insekten, einschließlich Rübenderbrüssler. Einige Studien haben gezeigt, dass die Unterdrückung der Expression des Chitin-Synthase-Gens mittels RNAi zu Entwicklungsstörungen und zum Tod von Rüsselkäfern führt, da ihr Exoskelett nicht ordnungsgemäß ausgebildet wird.

RNAi gegen Verdauungsenzyme: Verdauungsenzyme spielen eine wichtige Rolle im Verdauungssystem von Rüsselkäfern, insbesondere von Rübenderbrüsslern, und sind für die Aufnahme von Nährstoffen aus ihrer Nahrung unerlässlich. Durch die gezielte Unterdrückung der Expression bestimmter Verdauungsenzyme mittels RNAi können Rüsselkäfer in ihrer Nahrungsaufnahme und Nährstoffverwertung beeinträchtigt werden, was letztendlich zu ihrem Tod führt.

RNAi gegen Entgiftungs- und Abwehrmechanismen: Rüsselkäfer, insbesondere Rübenderbrüssler, verfügen über verschiedene Mechanismen zur Entgiftung von chemischen Verbindungen und zur Abwehr von schädlichen Substanzen in ihrer Umwelt. Einige Studien haben gezeigt, dass die Unterdrückung der Expression von Genen, die an diesen Entgiftungs- und Abwehrmechanismen beteiligt sind, mittels RNAi die Empfindlichkeit von Rüsselkäfern gegenüber Insektiziden oder anderen schädlichen Substanzen erhöhen.

Um eine effektive Wirkung zu erzielen, ist die ausreichende Aufnahme der RNA entscheidend, welche durch die schwache Umweltbeständigkeit der RNA und das mitunter geringe Aufnahmevermögen von Lebewesen erschwert wird. Daher werden vorzugsweise stabilisierende Formulierungen zum Schutz der RNA eingesetzt, beispielsweise durch Adsorption an kleine Lehmpartikel oder durch Einschluss in Liposomen. Es ist auch möglich, die RNA direkt in Mikroorganismen herzustellen und diese gleichzeitig als Schutz- und Transportvehikel zu nutzen. Geeignete praktisch relevante Formulierungen für die RNA sind der Fachperson bekannt und beispielswese in WO 2015/089543 A1, WO 2015/089590 A1, WO 2016/201523 A1 und WO 2016/164987 A1 beschrieben. Besonders bevorzugt sind erfindungsgemäß das Vorsehen von "Layered Double Hydroxide (LDH)-Partikel" (also zweidimensionale, geschichtete doppel-Hydroxid-Nanomaterialien, die zur Familie der anionischen Tone gehören (wobei LDH im Verhältnis von dsRNA vorzugsweise erhöht ist, insbesondere zumindest etwa 1 x dsRNA auf 5 x LDH)) oder Siliziumdioxid-Vesikel. Zusätzlich kann eine Adsorption von dsRNA-Molekülen auf Tonkomplexen zum Schutz von dsRNA-Molekülen vor natürlich vorkommenden Nukleasen und UV-Licht schützen.

Die Zuckerrübe ist eine bedeutende Nutzpflanze, die weltweit in gemäßigten Klimazonen angebaut wird und eine wichtige Quelle für die Zuckerproduktion darstellt. Die landwirtschaftliche Produktion von Zuckerrübenfeldern umfasst eine Reihe von Schritten, die sorgfältige Planung, Bodenvorbereitung, Aussaat, Pflege und Ernte erfordern.

Die Bodenvorbereitung ist ein entscheidender Schritt bei der Produktion von Zuckerrübenfeldern und umfasst verschiedene Maßnahmen zur Vorbereitung des Bodens für die Aussaat. Dazu gehören das Pflügen, Eggen, Walzen und eine eventuelle Bodenbearbeitung zur Lockerung und Entfernung von Unkräutern. Die Bodenvorbereitung zielt darauf ab, eine optimale Bodenstruktur und -fruchtbarkeit zu schaffen, um das Wachstum und die Entwicklung der Zuckerrübenpflanzen zu fördern.

Die Aussaat ist ein wichtiger Schritt, bei dem die Zuckerrübensamen in den vorbereiteten Boden eingeführt werden. Die Aussaat erfolgt in der Regel in Reihenkulturen mit einem bestimmten Pflanzabstand, um eine optimale Entwicklung der Pflanzen zu gewährleisten und eine effiziente Unkrautbekämpfung zu ermöglichen. Sämaschinen werden bevorzugt für die Aussaat von Zuckerrüben verwendet, um eine präzise Platzierung der Samen und eine gleichmäßige Verteilung im Feld sicherzustellen.

Die Pflege der Zuckerrübenkultur umfasst eine Reihe von Maßnahmen zur Förderung ihres Wachstums und ihrer Entwicklung während der Vegetationsperiode. Dazu gehören Bewässerung, Unkrautbekämpfung, Düngung und der Schutz vor Schädlingen und Krankheiten. Die Bewässerung spielt eine entscheidende Rolle, um sicherzustellen, dass die Zuckerrüben ausreichend Feuchtigkeit erhalten, insbesondere während trockener Perioden.

Die Unkrautbekämpfung ist ein wichtiger Aspekt der Zuckerrübenproduktion, da Unkräuter das Wachstum der Zuckerrüben beeinträchtigen und den Ertrag mindern können. Herbizide werden häufig eingesetzt, um Unkräuter zu kontrollieren und das Wachstum der Zuckerrübenpflanzen nicht zu beeinträchtigen.

Die Düngung erfolgt in der Regel basierend auf Bodenanalysen und den Nährstoffbedürfnissen der Zuckerrübenpflanzen. Stickstoff, Phosphor und Kalium sind wichtige Nährstoffe, die für ein gesundes Wachstum der Zuckerrüben benötigt werden, und werden in der Regel in Form von Mineraldüngern zugeführt.

Der Schutz vor Schädlingen und Krankheiten ist ein weiterer wichtiger Aspekt der Zuckerrübenproduktion. Verschiedene Schädlinge wie Rüsselkäfer, Blattläuse und Drahtwürmer können erhebliche Schäden an Zuckerrübenpflanzen verursachen und erfordern eine rechtzeitige Bekämpfung durch den Einsatz von Insektiziden oder anderen Methoden.

Die Ernte von Zuckerrüben erfolgt in der Regel, wenn die Wurzeln ausreichend gewachsen sind und einen hohen Zuckergehalt erreicht haben. Moderne Erntemaschinen wie Rübenvollernter werden verwendet, um die Zuckerrüben aus dem Boden zu heben, zu reinigen und zu lagern. Die geernteten Zuckerrüben werden dann zu Zuckerfabriken transportiert, wo sie weiterverarbeitet werden, um Zucker zu extrahieren.

Insgesamt erfordert die landwirtschaftliche Produktion von Zuckerrübenfeldern eine sorgfältige Planung, Pflege und Überwachung, um hohe Erträge und Qualität zu erzielen. Die Optimierung der Produktionspraktiken sowie der Einsatz moderner Technologien und Methoden spielen eine wichtige Rolle bei der Steigerung der Effizienz und Rentabilität von Zuckerrübenanbaubetrieben.

Eine der verbreitetsten landwirtschaftlichen Produktionsmethoden von Zuckerrübenfeldern sieht eine Kombination mit dem Anbau von Winterweizen vor:
Die Kombination von Zuckerrübenanbau mit der Vorfrucht Winterweizen ist daher eine bewährte Praxis in vielen landwirtschaftlichen Regionen, die verschiedene Vorteile bietet, darunter die Diversifizierung der Anbausysteme, die Nutzung von Boden- und Ressourceneffizienz sowie die Risikominderung gegenüber Umwelt- und Marktfaktoren. Diese Kombination ist demgemäß auch eine bevorzugte Ausführungsform der vorliegenden Erfindung.

### 1. Fruchtfolge und Planung:

Die Kombination von Zuckerrüben mit Winterweizen erfolgt in der Regel im Rahmen einer Fruchtfolge, bei der verschiedene Kulturen in aufeinanderfolgenden Jahren auf demselben Feld angebaut werden. Eine sorgfältige Planung der Fruchtfolge ist entscheidend, um die Bodenfruchtbarkeit zu erhalten, Krankheiten und Schädlinge zu kontrollieren und eine optimale Nutzung der verfügbaren Ressourcen zu gewährleisten.

Die Fruchtfolge von Zuckerrüben und Winterweizen bietet Vorteile wie die Unterdrückung von Unkräutern und Krankheiten, die Verbesserung der Bodengesundheit durch die Zufuhr unterschiedlicher Nährstoffe und die Reduzierung des Risikos von Ernteausfällen durch widrige Wetterbedingungen oder Schädlinge, da die Anfälligkeit für bestimmte Krankheiten und Schädlinge durch die Rotation verschiedener Kulturen verringert wird.

### 2. Bodenvorbereitung und Aussaat:

Die Bodenvorbereitung für den Anbau von Winterweizen erfolgt ähnlich wie bei der alleinigen Produktion von Zuckerrüben. Der Boden wird gepflügt, geebnet und vorbereitet, um optimale Bedingungen für die Aussaat zu schaffen. Moderne landwirtschaftliche Maschinen und Geräte werden verwendet, um eine effiziente Bodenvorbereitung und Aussaat zu gewährleisten.

Die Aussaat erfolgt entsprechend den Anforderungen des Winterweizens in Reihenkulturen oder in einer Mischkultur, wobei der Pflanzabstand und die Saatdichte entsprechend den spezifischen Bedürfnissen der beiden Kulturen angepasst werden. Die präzise Platzierung der Samen und die gleichmäßige Verteilung im Feld sind entscheidend für eine erfolgreiche Etablierung und Entwicklung der Pflanzen.

### 3. Pflege der Felder:

Die Pflege der Felder umfasst eine Reihe von Maßnahmen zur Förderung des Wachstums und der Entwicklung von Winterweizen während der Vegetationsperiode. Dazu gehören Bewässerung, Unkrautbekämpfung, Düngung und der Schutz vor Schädlingen und Krankheiten, die für beide Kulturen relevant sind.

Die Bewässerung wird entsprechend den Bedürfnissen der beiden Kulturen angepasst, wobei darauf geachtet wird, eine ausreichende Feuchtigkeitsversorgung zu gewährleisten, insbesondere während trockener Perioden.

Die Unkrautbekämpfung erfolgt durch den Einsatz von Herbiziden, mechanischer Unkrautbekämpfung oder Handarbeit, um die Konkurrenz der Unkräuter zu reduzieren und das Wachstum und den Ertrag der Zuckerrüben und des Winterweizens nicht zu beeinträchtigen.

Die Düngung erfolgt basierend auf Bodenanalysen und den spezifischen Nährstoffbedürfnissen der beiden Kulturen, wobei Stickstoff, Phosphor, Kalium und andere wichtige Nährstoffe berücksichtigt werden, um ein gesundes Wachstum und hohe Erträge zu erzielen.

Der Schutz vor Schädlingen und Krankheiten erfolgt durch rechtzeitige Überwachung und Bekämpfung von Schädlingen und Krankheiten, die beide Kulturen beeinträchtigen können. Der Einsatz von Insektiziden, Fungiziden und anderen Methoden zur Schädlingsbekämpfung wird entsprechend den Anforderungen und Empfehlungen durchgeführt.

### 4. Ernte und Nachbearbeitung:

Die Ernte von Zuckerrüben und Winterweizen erfolgt zu unterschiedlichen Zeitpunkten, je nach dem Entwicklungsstadium der Pflanzen und den optimalen Bedingungen für die Ernte. Moderne Erntemaschinen und Geräte werden verwendet, um eine effiziente Ernte und Nachbearbeitung der Ernte zu gewährleisten, einschließlich Reinigung, Lagerung und Vermarktung der Produkte.

Insgesamt bietet die Kombination von Zuckerrübenanbau mit dem Anbau von Winterweizen eine Vielzahl von Vorteilen für Landwirte, einschließlich einer verbesserten Bodenfruchtbarkeit, einer diversifizierten Einkommensquelle und einer nachhaltigen Nutzung landwirtschaftlicher Ressourcen. Durch eine sorgfältige Planung, Pflege und Überwachung können landwirtschaftliche Betriebe eine erfolgreiche und rentable Produktion von Zuckerrübenfeldern in Kombination mit Winterweizen erreichen.

Besonders vorteilhaft ist ein erfindungsgemäßes Verfahren bei dem die Zusammensetzung weiters einen Lockstoff für den Rüsselkäfer, insbesondere den Rübenderbrüssler, umfasst oder der Lockstoff in Zusammenhang mit dem Anwenden der Zusammensetzung, enthaltend das Nukleinsäuremolekül, angewendet wird. Geprüft wurden die Lockstoffe 1R,2S-cis-1-Methyl-2-Isopropenylcyclobutaneethanol (Grandlure I: CAS No: 26532-22-9), (Z)-2-(3,3-Dimethyl)-Cyclohexylideneethanol (Grandlure II: CAS No: 26532-23-0), (Z)-(3,3-Dimethyl)-Cyclohexylidenacetaldehyd (Grandlure III: CAS No: 26532-24-1) und(E)-(3,3-Dimethylcyclohexyliden)acetaldehyd (Grandlure IV: CAS No: 26352-25-2). Insbesondere die Mischung aus (Z)-(3,3-Dimethyl)-Cyclohexylidenacetaldehyd mit (E)-(3,3-Dimethylcyclohexyliden)acetaldehyd ist für den Rübenderbrüssler attraktiv. Alternative Lockstoffe können auch zerkleinerte oder zerriebene Zuckerrübenbestandteile wie z.B. Zuckerrübenblätter, oder auch zerkleinerte oder zerriebene Bestandteile von Pflanzen, die für den Schädling attraktiv sind (z.B. Fangpflanzen), die z.B. durch Trocknung und/oder Einfrieren haltbar gemacht worden sind, oder Extrakte von Zuckerrübenbestandteile wie z.B. Zuckerrübenblättern sein, oder von Pflanzen, die für den Schädling attraktiv sind (z.B. Fangpflanzen), wodurch der Duft oder das Aroma (das "Duftbouquet") der (intakten) Pflanzen bzw. Blätter imitiert wird.

Die Bepflanzung der Fangpflanzenstreifen sollte dabei möglichst dicht sein und kann vorteilhafter Weise mindestens 10, vorzugsweise mindestens 50, insbesondere mindestens 100, Fangpflanzen pro m² oder mehr umfassen. Fangpflanzstreifen, die mit einer Fangpflanzendichtsaat von 100 bis 700, vorzugsweise von 200 bis 500, Fangpflanzen pro m² bepflanzt sind, haben sich erfindungsgemäß als besonders vorteilhaft herausgestellt.

Vorzugsweise stammt die Fangpflanze in den Fangpflanzenstreifen aus der Familie der Amaranthaceaen, vorzugsweise aus der Gattung Chenopodium, insbesondere Weißer Gänsefuß; oder aus der Gattung Beta, insbesondere Mangold oder Rote Rübe.

Die erfindungsgemäß anzuwendende Zusammensetzung kann weitere Stoffe enthalten, die landwirtschaftlich oder formulierungstechnisch erforderlich oder vorteilhaft sind. Die Zusammensetzung kann auch mit weiteren Zusammensetzungen, die getrennt von der erfindungsgemäß anzuwendenden Zusammensetzung auf der landwirtschaftlichen Nutzfläche, am Rande der landwirtschaftlichen Nutzfläche oder im Fangstreifen verwendet werden können, kombiniert werden. Die erfindungsgemäß anzuwendende Zusammensetzung umfasst vorzugsweise weiterhin mindestens ein Adjuvans und/oder mindestens ein Tensid, und/oder mindestens einen geeigneten Träger oder Grundstoff und/oder mindestens ein geeignetes Verdünnungsmittel. Besonders bevorzugte Zusatzstoffe sind Penetratoren, Sticker und/oder klassische Netzmittel. Penetratoren dienen zur verbesserten Aufnahme und Benetzung im Blatt oder Schädling. Beispiele hierfür sind Ethanol, Tenside, Silikonöle und/oder Kalzium. Sticker erhöhen die UV-Stabilität des Wirkstoffes und verbessern die Regenfestigkeit, was die Wirkungsdauer verlängert. Besonders bevorzugte Beispiele hierfür sind Klassische Netzmittel senken die Oberflächenspannung der Spritzbrühe und verbessern so die Verteilung des Wirkstoffes auf der Pflanze, wodurch Verluste durch Abperlen reduziert werden. Zu den erfindungsgemäß bevorzugten klassischen Netzmitteln gehören Paraffinöle, Rapsölmethylester, Organosilikon, Polyether-Polymethylsiloxan-Copolymer, synthetischer Latex, aliphatische Alkohole, Siloxane, Rapsölethylester, Rapsölmethylester, nichtionische Tenside, alkoxyliertes Soja-Öl, Tallöl-Fettsäure, Alkylpolyglycoside, Essigsäure, synthetischer Latex und Kombinationen davon, insbesondere die folgenden Kombinationen: synthetischer Latex/aliphatische Alkohole/Siloxane, Rapsölethylester/Rapsölmethylester/nichtionische Tenside, alkoxyliertes Soja-Öl/Tallöl-Fettsäure/Alkylpolyglycoside/Essigsäure.

Die Fachperson hat viele verschiedene Möglichkeiten, die Sequenz des Polynukleotids zu wählen, so dass das Polynukleotid nach Aufnahme durch den Rüsselkäfer, insbesondere den Rübenderbrüssler, im Rüsselkäfer, insbesondere im Rübenderbrüssler, zur Hemmung des Wachstums und/oder zum Tod und/oder zur Unfruchtbarkeit des Rüsselkäfers, insbesondere des Rübenderbrüsslers, führt.

Die Anwendung der erfindungsgemäßen Zusammensetzung auf der landwirtschaftlichen Nutzfläche oder im Fang(pflanzen)streifen kann auf herkömmliche Art und Weise erfolgen. Somit können die vorhandenen Vorrichtungen für die Durchführung des erfindungsgemäßen Verfahrens genützt werden. Vorteilhafterweise erfolgt das Ausbringen der Zusammensetzung als Spritzbrühe mit einer Feldspritze im Rahmen einer Breitflächenapplikation, vorzugsweise mit einer luftdruckunterstützten Feldspritze, insbesondere mit einem Druck von 3 bar oder höher. Die Applikation wird vorzugsweise so gewählt, dass die erfindungsgemäße Ausbringung der Zusammensetzung effizient auf die Fangpflanzen oder die Nutzpflanzen (z.B. die Zuckerrüben) gezielt aufgebracht wird, und so wenig wie möglich auf den Boden verloren geht. Die Einstellungen der Spritze orientieren sich in diesem Fall danach und können für jeden Einzelfall und jede Feldgeometrie leicht angepasst werden.

Das erfindungsgemäße Verfahren eignet sich hervorragend zur Kombination mit weiteren, an sich bekannten Verfahren und Maßnahmen, die die Fachperson zur Bekämpfung von Rüsselkäferplagen kennt, insbesondere die eingangs geschilderten chemischen, biologischen und physikalischen Maßnahmen. Daher besteht eine bevorzugte Ausführungsform der vorliegenden Erfindung in einem Verfahren, bei dem weiters ein oder mehrere an sich bekannte Bekämpfungs- oder Kontrollmethoden für Rüsselkäfer, insbesondere für Rübenderbrüssler, angewendet werden, vorzugsweise zumindest eine weitere chemische Kontrollmethode, zumindest eine physikalische Kontrollmethode und/oder zumindest eine weitere biologische Kontrollmethode und/oder zumindest eine weitere kulturelle und/oder physikalische Maßnahme.

Der Zeitpunkt der erfindungsgemäßen Aufbringung der Zusammensetzung sollte vorteilhafter Weise mit dem Lebenszyklus der Rüsselkäfer abgestimmt sein, also z.B. beim Auftreten des Käfers and der Oberfläche oder bei Beginn der Nahrungsaufnahme im Frühjahr oder beim Übergang vom Larvenstadium zum erwachsenen Käfer oder unmittelbar danach erfolgen, so dass die Population der Käfer noch sehr klein oder sehr jung ist (oder kurz davor), so dass die Entwicklung, Fortpflanzungsfähigkeit oder Überlebensfähigkeit der Rüsselkäfer möglichst früh inhibiert wird oder die Zahl der Käfer noch relativ gering ist.

Der Rübenderbrüssler überwintert meist auf den letztjährigen Rübenflächen in einer vertikalen Erdkammer in 10-20 cm Bodentiefe, jedoch sind auch Puppenwiegen in 15-50 cm Tiefe beschrieben worden. Bei Bodentemperaturen über +8°C werden die Käfer aktiv und graben sich bis knapp unter die Erdoberfläche hinauf. Ab +8°C Lufttemperatur kommen die Käfer dann an der Erdoberfläche. Je nach Witterungslage tritt der Käfer um Mitte März bis April auf, wobei der Zeitpunkt entscheidend davon abhängt, das ein trockener Boden und warme Temperaturen vorhanden sind. Nach seinem Auftreten beginnt der Käfer mit der Nahrungsaufnahme, wobei der Nahrungsbedarf von der Temperatur beeinflusst, aber erst ab etwa 15°C gesteigert vorhanden ist. Für die Erreichung der Geschlechtsfähigkeit, vor allem vor der Paarung und der Eiablage, ist eine erhöhte Nahrungsaufnahme ("Reifefraß") nötig, wobei pro Tag von einem Käfer bis zu 8-10 junge Rübenpflanzen vernichtet werden können. Warme Witterung führt auf Grund der vermehrten Nahrungsaufnahme meist zu einer schnelleren Reife und einer erhöhten Anzahl an abgelegten Eiern. Daher verursacht der Rübenderbrüssler zwischen März und Juni seine Wirkung als Rübenschädling, da er dann an der Erdoberfläche aktiv ist (Masterarbeit Lydia Jarmer, 2022).

Vorzugsweise wird daher das Anwenden der Zusammensetzung ab einer Außentemperatur von 8°C, bevorzugt ab 10°C vorgenommen, vorzugsweise im Zeitraum Februar bis Juni, insbesondere März bis Mai. Andererseits kann die erfindungsgemäße Zusammensetzung auch ausgebracht werden, kurz bevor die erwachsenen Käfer aus der Puppe schlüpfen, so dass die frisch geschlüpften Käfer beim Übergang vom Larvenstadium zum erwachsenen Käfer oder unmittelbar danach in Kontakt mit der Nukleinsäure-hältigen Zusammensetzung kommen.

Das erfindungsgemäße Verfahren kann auch in Kombination mit herkömmlichen Pflanzenschutzmitteln erfolgen, wie z.B. in Kombination mit einem oder mehreren Insektiziden, insbesondere mit Flupyradifuron oder mit einem Pyrethroid. Flupyradifuron ist eine chemische Verbindung aus der Gruppe der Butenolide, die als Insektizid wirksam ist, jedoch wie die Neonicotinoide ein nAChR-Agonist ist, der die nikotinischen Acetylcholinrezeptoren dauerhaft öffnet und so die chemische Signalübertragung stört. Es ist weniger bienengefährlich als die meisten anderen Neonicotinoide. Pyrethroide sind synthetische Insektizide, die an die Hauptwirkstoffe des natürlichen Insektizids Pyrethrum angelehnt sind. Die Struktur eines Pyrethroids wird in der Regel von einem der natürlichen Pyrethrine hergeleitet und seine biologischen Eigenschaften im Wesentlichen mit denen der bekannten Pyrethroide übereinstimmen. Typisch für Pyrethroide sind ihre rasche Wirksamkeit ("knock down") auch bei niedriger Dosierung, die geringe Giftigkeit für Warmblüter, Lipophilie und ein niedriger Dampfdruck. Pyrethroide sind billiger und in größeren Mengen herstellbar als Pyrethrum, meist sind sie besser wirksam.

Besonders gut geeignet ist das erfindungsgemäße Verfahren bei einer landwirtschaftlichen Nutzfläche, insbesondere einer Vorjahresrübenfläche, auf der Winterweizen angebaut worden ist. Insbesondere die Fruchtfolge Winterweizen-Zuckerrübe eignet sich besonders gut für das erfindungsgemäße Verfahren, weil damit auch der Lebenszyklus der Rüsselkäfer gut in das Ernteschema und das erfindungsgemäße Behandlungsschema eingepasst werden kann.

Die Fangpflanzen können, je nach Art und Klima, vorzugsweise entweder bereits im Herbst oder im zeitigen Frühling (also jedenfalls vor den Ziel-Nutzpflanzen, insbesondere vor den Zuckerrüben) angebaut und vorteilhafterweise auch vor dem Wachstum der Nutzpflanzen erfindungsgemäß behandelt werden.

Die vorliegende Erfindung betrifft auch ein Verfahren zur Bekämpfung einer Rübenderbrüssler (Rübenderbrüssler; *Asproparthenis punctiventris*)-Befalls*,* insbesondere wenn sich dies als Plage oder Kalamität (also ein schwerer Schaden in der Pflanzenkultur, insbesondere ein Totalausfall der Ernte) ausweitet oder ausgeweitet hat, bei der landwirtschaftlichen Produktion von Zuckerrüben (*Beta vulgaris ssp. vulgaris*), welches auf oder neben einer landwirtschaftlichen Fläche, die für den Anbau von Zuckerrüben bestimmt ist oder auf der Zuckerrüben angebaut werden, das Anwenden einer Zusammensetzung, enthaltend ein Nukleinsäuremolekül, das ein Polynukleotid umfasst, wobei eine Aufnahme des Polynukleotids durch den Rübenderbrüssler zur wirksamen Bekämpfung des Rübenderbrüsslers führt.

Die vorliegende Erfindung wird anhand der nachfolgenden Beispiele und der Zeichnungsfiguren näher beschrieben, ohne jedoch darauf beschränkt zu sein.

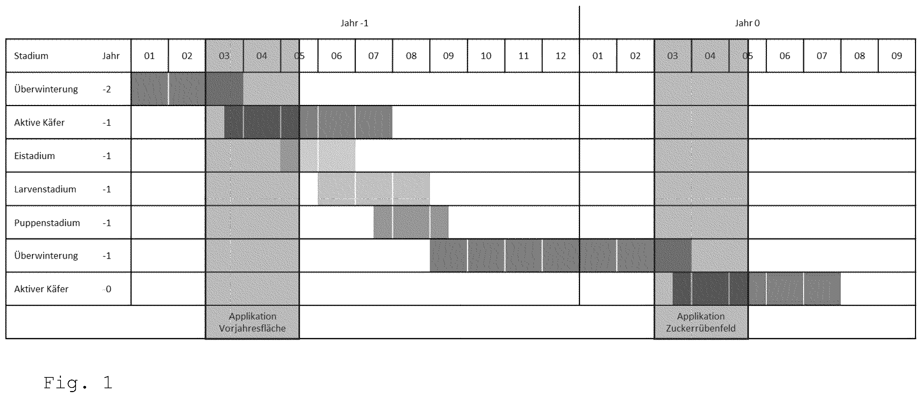

Fig. 1 zeigt den Lebenszyklus des Rübenderbrüsslers und die bevorzugten Zeiträume für die erfindungsgemäße Aufbringung der Nukleinsäuren auf die landwirtschaftliche Nutzfläche oder die Fangpflanzen.
Figs. 2 und 3 zeigen Anwendungsstrategien des erfindungsgemäßen Konzepts: Fig. 2 zeigt die Anwendung im Vorjahresbestand (Winterweizen) ab einer Außentemperatur von (10°C); Fig. 3 zeigt die Anwendung an der Zuckerrübe selbst.

### Material und Methoden für bevorzugte Applikationsszenarien eines erfindungsgemäßen RNAi

### Sprays:

**1) Applikationstechnik im Vorjahresbestand**
   Anbaufeldspritze/ Anhängefeldspritze/ Selbstfahrende Feldspritze:
   Düsentyp: 0,25 - 0,3er Injektor-Düsen
   Druck: 3 bar
   Fahrgeschwindigkeit: 8 km/h
   Entfernung Spritzbalken von Oberkante Kulturbestand: 30-40 cm
   Anzahl der Anwendungen: 1x
   Aufwandmenge: 10g dsRNAi/ha
   Wasseraufwandmenge: 200-250 l/ha
   Luftdruckunterstützte Feldspritze (z.B. Twin Force von Hardy)
   Düsentyp: 0,25 - 0,3er Injektor-Düsen, wobei eine andere Tröpfchengröße ebenfalls funktioniert
   Druck: 3 bar
   Fahrgeschwindigkeit: 8 km/h
   Entfernung Spritzbalken von Oberkante Kulturbestand: 30-40 cm
   Anzahl der Anwendungen: 1x
   Aufwandmenge: 10g dsRNAi/ha
   Wasseraufwandmenge: offen
**2) Applikationstechnik in Zuckerrübe**
   Anbaufeldspritze/ Anhängefeldspritze/ Selbstfahrende Feldspritze:
   Düsentyp: IDKT (kompakte Injektordüse als Doppelflachstrahldüse)
   Druck: 3 bar
   Fahrgeschwindigkeit: 8 km/h
   Anzahl der Anwendungen: 1x
   Aufwandmenge: 10g dsRNAi/ha
   Wasseraufwandmenge: 200-250 l/ha
**3) Anbau von Fangpflanzen (Catch Crops) zur Konzentration des Schädlings**
   Anbau von Fangpflanzen (z.B. Mangold, Rote Rübe etc.) rund um die neuen Zuckerrübenfelder und/oder Vorjahresbestände
   Anbauzeitpunkt: ab Mitte Februar
   Konzentrierte Applikation des RNAi-Sprays im Bereich der Fangpflanzen
**4) Anwendung von Lockstoffen (z.B. Grandlure III-IV) in Kombination mit dem RNAi-Spray**
   Um einen optimalen Effekt zu erzielen, ist die Fläche mit Fallen vollständig einzusäumen, wobei alle 15m eine Falle zu setzen ist. Die Applikation des RNAi-Sprays erfolgt auf den Fangpflanzen. Diese sind in Dichtsaat rund um die Vorjahrsfläche und/oder Zuckerrübe angebaut.

### Applikationszenarien des RNAi Sprays

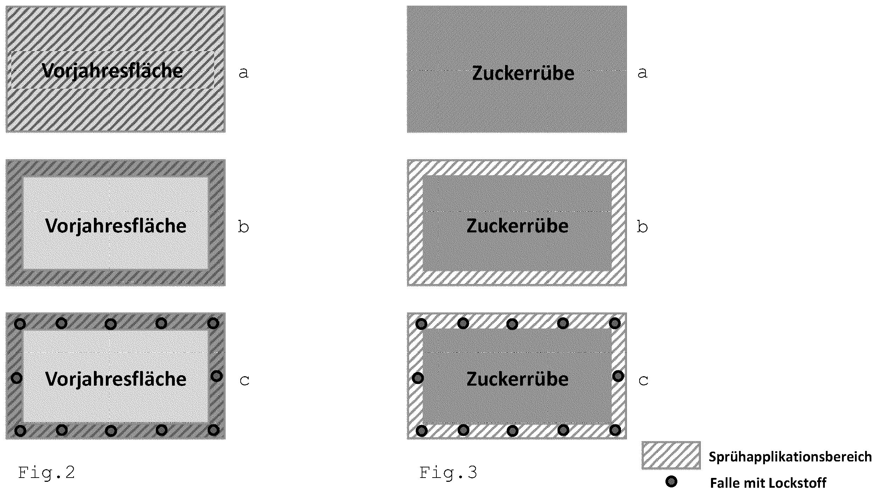

**1) Applikation im Vorjahresbestand (v.a.Winterweizen):**
   Ab einer Außentemperatur von (10°C) wird der RNAi-Spray unter Punkt 1 genannten Spezifikationen appliziert (die folgenden Szenarien (auch diejenigen unter den Punkten 2) und 3)) sind der allgemeinen Beschreibung der vorliegenden Erfindung zuzuordnen und somit allgemein für alle Ausführungsvarianten der vorliegenden Erfindung anwendbar):
   a. **Breitflächig:** die Applikation des RNAi-Sprays erfolgt auf der gesamten Vorjahresfläche oder einem bedeutenden Teil davon, z.B. auf 30 % oder mehr der Vorjahresfläche, insbesondere auf 50 % oder mehr der Vorjahresfläche, oder z.B. nur auf der der Seite oder dem Teil des Feldes, auf der der Befall zu erwarten ist (Fig. 2a).
   b. **Catch Crop:** Im Randbereich werden, wie unter Punkt 2 beschrieben, rund um die Vorjahresfläche (womit auch den Rand um nur eine Seite oder z.B. auf nur zwei oder drei Seiten der Vorjahresfläche, insbesondere auf jener Seite oder jenen Seiten, die zum nächstgelegenen Rübenfeld liegen), Fangpflanzen in Dichtsaat angebaut. Die Applikation des RNAi-Sprays mit oder ohne Lockstoffe oder Duft bzw. Aroma ("Duftbouquet") der Zuckerrübenblätter konzentriert sich im Bereich der Fangpflanzen (Fig. 2b).
   c. **Catch Crop** + **Lockstoff (z.B. Grandlure):** Im Randbereich werden, wie unter Punkt 2 beschrieben, rund um die Vorjahresfläche bzw. auf einer oder mehreren Seiten davon, Fangpflanzen in Dichtsaat angebaut. Zusätzlich wird der RNAi-Spray in Kombination mit einem Lockstoff (z.B. Grandlure) oder Duft bzw. Aroma ("Duftbouquet") der Zuckerrübenblätter entweder in Form von Lockstofffallen (im Abstand von z.B. 15m im Fangpflanzenstreifen) und/oder als Spray appliziert (Fig. 2c).
**2) Applikation in Zuckerrübe**
   a. **Breitflächig:** die Applikation des RNAi-Sprays erfolgt auf der gesamten Zuckerrübenfläche oder einem Teil davon (z.B. auf 30 % oder mehr der Vorjahresfläche, insbesondere auf 50 % oder mehr der Vorjahresfläche) oder z.B. nur auf der Seite oder dem Teil des Feldes, auf der der Befall zu erwarten ist (Fig. 3a).
   **b. Catch Crop:** Im Randbereich werden, wie unter Punkt 2 beschrieben, rund um das aktuelle Zuckerrübenfeld (womit auch den Rand um nur eine Seite oder z.B. auf nur zwei oder drei Seiten der Vorjahresfläche, insbesondere auf jener Seite oder jenen Seiten, die zum nächstgelegenen Rübenfeld liegen), Fangpflanzen in Dichtsaat angebaut. Die Applikation des RNAi-Sprays mit oder ohne Lockstoffe oder Duft bzw. Aroma ("Duftbouquet") der Zuckerrübenblätter konzentriert sich im Bereich der Fangpflanzen (Fig. 3b).
   c. **Catch Crop** + **Lockstoff (z.B. Grandlure):** Im Randbereich werden, wie unter Punkt 2 beschrieben, rund um das aktuelle Zuckerrübenfeld, Fangpflanzen in Dichtsaat angebaut. Zusätzlich wird der RNAi-Spray in Kombination mit dem Lockstoff (Grandlure) oder Duft bzw. Aroma ("Duftbouquet") der Zuckerrübenblätter entweder in Form von Lockstofffallen (im Abstand von z.B. 15m im Fangpflanzenstreifen) und/oder als Spray appliziert (Fig. 2c).
3) Applikation im Vorjahrsbestand und Zuckerrübe (Kombination aus Punkt 1 & 2)
   a. Breitflächig: Die Applikation des RNAi-Sprays erfolgt auf der gesamten sowohl auf der Vorjahresfläche und auf der aktuellen Zuckerrübenfläche (oder einem bedeutenden Teil davon, z.B. auf 30 % oder mehr der Vorjahresfläche, insbesondere auf 50 % oder mehr der Vorjahresfläche) oder z.B. nur auf der der Seite oder dem Teil des Feldes, auf der der Befall zu erwarten ist (Fig.2a + Fig.3a).
   b. Catch Crop: Im Randbereich werden, wie unter Punkt 2 beschrieben, rund um die Vorjahresfläche (womit auch den Rand um nur eine Seite oder z.B. auf nur zwei oder drei Seiten der Vorjahresfläche, insbesondere auf jener Seite oder jenen Seiten, die zum nächstgelegenen Rübenfeld liegen) und dem aktuellen Zuckerrübenfeld, Fangpflanzen in Dichtsaat angebaut. Die Applikation des RNAi-Sprays mit oder ohne Duftbouquet der Zuckerrübenblätter konzentriert sich im Bereich der Fangpflanzen (Fig.2b + Fig.3b).
   c. Catch Crop + Lockstoff (z.B. Grandlure): Im Randbereich werden, wie unter Punkt 2 beschrieben, rund um die Vorjahresfläche und dem aktuellen Zuckerrübenfeld bzw. auf einer oder mehreren Seiten davon, Fangpflanzen in Dichtsaat angebaut. Zusätzlich wird der RNAi-Spray in Kombination mit einem Lockstoff (z.B. Grandlure) oder Duft bzw. Aroma ("Duftbouquet") der Zuckerrübenblätter entweder in Form von Lockstofffallen (im Abstand von 15m im Fangpflanzenstreifen) und/oder als Spray appliziert (Fig.2c + Fig.3c).

Demgemäß betrifft die vorliegende Erfindung die folgenden bevorzugten Ausführungsformen:
1. Verfahren zur Bekämpfung eines Rüsselkäferbefalls bei der landwirtschaftlichen Produktion von Nutzpflanzen, vorzugsweise für Nutzpflanzen, für die ein Risiko eines Rüsselkäferbefalls besteht, wobei eine Zusammensetzung, die ein oder mehrere Arten von Nukleinsäuremolekülen, die den Stoffwechsel, die Entwicklung, Fortpflanzungsfähigkeit oder Überlebensfähigkeit von Rüsselkäfern (Curculionidae) inhibieren,
   (i) auf eine landwirtschaftliche Nutzfläche aufgebracht wird; und/oder
   (ii) auf Fangpflanzenstreifen am Rand der, in der und/oder rund um die landwirtschaftliche Nutzfläche aufgebracht wird;
   so dass die Rüsselkäfer mit den Nukleinsäuremolekülen in Kontakt kommen, so dass die Entwicklung, Fortpflanzungsfähigkeit oder Überlebensfähigkeit der Rüsselkäfer inhibiert wird.
2. Verfahren nach Ausführungsform 1, wobei der Rüsselkäferbefall ein Rübenderbrüssler-(Zuckerrübenrüssler; Asproparthenis punctiventris)-befall ist.
3. Verfahren nach Ausführungsform 1 oder 2, wobei die landwirtschaftliche Produktion von Nutzpflanzen eine landwirtschaftliche Produktion von Zuckerrüben (Beta vulgaris ssp. vulgaris ist), für die ein Risiko eines Rübenderbrüsslerbefalls besteht.
4. Verfahren nach einer der Ausführungsformen 1 bis 3, wobei das Nukleinsäuremolekül ein Interferenz-RNA- (RNAi-)Molekül ist.
5. Verfahren nach einer der Ausführungsformen 1 bis 4, wobei die landwirtschaftliche Nutzfläche eine Vorjahresrübenfläche ist und/oder wobei das Aufbringen auf einem bedeutender Teil der landwirtschaftlichen Nutzfläche, vorzugsweise auf 30 % oder mehr der Nutzfläche, insbesondere auf 50 % mehr der Nutzfläche, erfolgt oder nur auf der der Seite oder dem Teil des Feldes, auf der ein Befall zu erwarten ist.
6. Verfahren nach einer der Ausführungsformen 1 bis 5, wobei die Fangpflanzenstreifen mit einer Fangpflanzendichtsaat bepflanzt sind.
7. Verfahren nach einer der Ausführungsformen 1 bis 6, wobei die Fangpflanzenstreifen mit zumindest einer Fangpflanze, vorzugsweise zumindest 5 Fangpflanzen/m², vorzugsweise zumindest 10 Fangpflanzen/m², noch bevorzugter zumindest 20 Fangpflanzen/m², insbesondere zumindest 50 Fangpflanzen/m², bepflanzt sind.
8. Verfahren nach einer der Ausführungsformen 1 bis 7, wobei die Fangpflanzenstreifen innerhalb der landwirtschaftlichen Nutzfläche vorgesehen werden.
9. Verfahren nach einer der Ausführungsformen 1 bis 8, wobei die Zusammensetzung vollflächig oder nicht vollflächig, vorzugsweise nur am Rand der landwirtschaftlichen Nutzfläche, aufgebracht wird, wobei eine nicht vollflächige Aufbringung vorzugsweise auf landwirtschaftlichen Nutzflächen erfolgt, die im jeweiligen Vorjahr nicht befallen waren.
10. Verfahren nach einer der Ausführungsformen 1 bis 9, wobei die Zusammensetzung als Spray aufgebracht wird, insbesondere als Spray, der mit herkömmlichen landwirtschaftlichen Aufbringungsmitteln aufgebracht werden kann.
11. Verfahren nach einer der Ausführungsformen 1 bis 10, wobei die Zusammensetzung weiters einen Aggregationslockstoff und/oder einen Sexuallockstoff, insbesondere ein Pheromon, oder zerkleinerte oder zerstoßene Zuckerrübenblätter, die durch Trocknung und/oder Einfrieren haltbar gemacht worden sind, oder Extrakte von Zuckerrübenblättern umfasst.
12. Verfahren nach einer der Ausführungsformen 1 bis 11, wobei das Nukleinsäuremolekül Polynukleotid umfasst, dass eine Rüsselkäfer-RNAi, insbesondere eine Rübenderbrüssler-RNAi, ist, mit welcher eine dazugehörige mRNA des Rüsselkäfers, insbesondere des Rübenderbrüsslers, abgebaut wird oder deren Translation blockiert wird, wie beispielsweise die Proteasom-Untereinheit beta Typ-5 mRNA, die β-(beta)-Actin, die Mesh (dvssj2) mRNA, die α (alpha) COP mRNA oder die Kombination (Co-Targeting) von zumindest zwei Genen gleichzeitig; wobei insbesondere zumindest eine der vier hier konkret genannten mRNAs zum Einsatz kommt.
13. Verfahren nach einer der Ausführungsformen 1 bis 12, wobei das Nukleinsäuremolekül ein Polynukleotid umfasst, das eine Rüsselkäfer-RNAi, insbesondere eine Rübenderbrüssler-RNAi, ist, die gegen das Chitin-Synthase-Gen, gegen ein Verdauungsenzym im Rüsselkäfer, insbesondere im Rübenderbrüssler, oder gegen Gene des Rüsselkäfers, insbesondere des Rübenderbrüsslers, sind, die an den Entgiftungs- und Abwehrmechanismen des Rüsselkäfers, insbesondere des Rübenderbrüsslers, beteiligt sind.
14. Verfahren nach einer der Ausführungsformen 1 bis 13, wobei die Zusammensetzung weiters einen Lockstoff für den Rüsselkäfer, insbesondere den Rübenderbrüssler, umfasst oder der Lockstoff in Zusammenhang mit dem Anwenden der Zusammensetzung, enthaltend das Nukleinsäuremolekül, angewendet wird.
15. Verfahren nach einer der Ausführungsformen 1 bis 14, wobei in der Zusammensetzung ein Lockstoff, ausgewählt aus 1R,2S-cis-1-Methyl-2-Isopropenylcyclobutaneethanol (Grandlure I: CAS No: 26532-22-9), (Z)-2-(3,3-Dimethyl)-Cyclohexylideneethanol (Grandlure II: CAS No: 26532-23-0), (Z)-(3,3-Dimethyl)-Cyclohexylidenacetaldehyd (Grandlure III: CAS No: 26532-24-1), (E)-(3,3-Dimethylcyclohexyliden)acetaldehyd (Grandlure IV: CAS No: 26352-25-2), oder Mischungen davon, insbesondere (Z)-(3,3-Dimethyl)-Cyclohexylidenacetaldehyd, (E)-(3,3-Dimethylcyclohexyliden)acetaldehyd oder eine Mischung aus (Z)-(3,3-Dimethyl)-Cyclohexylidenacetaldehyd und (E)-(3,3-Dimethylcyclohexyliden)acetaldehyd, enthalten ist.
16. Verfahren nach einer der Ausführungsformen 1 bis 15, wobei die Fangpflanzenstreifen mit einer Fangpflanzendichtsaat von 100 bis 700, vorzugsweise von 200 bis 500, Fangpflanzen pro m² bepflanzt sind.
17. Verfahren nach einer der Ausführungsformen 1 bis 16, wobei die Fangpflanze in den Fangpflanzenstreifen ausgewählt ist aus Pflanzen aus der Familie der Amaranthaceaen, vorzugsweise aus der Gattung Chenopodium, insbesondere Weißer Gänsefuß; oder aus der Gattung Beta, insbesondere Mangold oder Rote Rübe.
18. Verfahren nach einer der Ausführungsformen 1 bis 17, wobei die Zusammensetzung weiterhin mindestens ein Adjuvans und/oder mindestens ein Tensid und/oder mindestens ein wirksames Pflanzenschutzagens und/oder mindestens einen geeigneten Träger oder Grundstoff und/oder mindestens ein geeignetes Verdünnungsmittel umfasst, vorzugsweise wobei die Zusammensetzung zumindest ein oder mehrere Penetratoren, Sticker, und/oder klassische Netzmittel umfasst.
19. Verfahren nach einer der Ausführungsformen 1 bis 18, wobei das Polynukleotid nach Aufnahme durch den Rüsselkäfer, insbesondere den Rübenderbrüssler, im Rüsselkäfer, insbesondere im Rübenderbrüssler, zur Hemmung des Wachstums und/oder zum Tod und/oder zur Unfruchtbarkeit des Rüsselkäfers, insbesondere des Rübenderbrüsslers, führt.
20. Verfahren nach einer der Ausführungsformen 1 bis 19, wobei das Ausbringen der Zusammensetzung als Spritzbrühe mit einer Feldspritze im Rahmen einer Breitflächenapplikation erfolgt, vorzugsweise mit einer luftdruckunterstützten Feldspritze, insbesondere mit einem Druck von 3 bar oder höher.
21. Verfahren nach einer der Ausführungsformen 1 bis 20, wobei weiters ein oder mehrere an sich bekannte Bekämpfungs- oder Kontrollmethoden für Rüsselkäfer, insbesondere für Rübenderbrüssler, angewendet werden, vorzugsweise zumindest eine weitere chemische Kontrollmethode, zumindest eine physikalische Kontrollmethode und/oder zumindest eine weitere biologische Kontrollmethode und/oder zumindest eine weitere kulturelle und/oder physikalischen Maßnahme.
22. Verfahren nach einer der Ausführungsformen 1 bis 21, wobei das Anwenden der Zusammensetzung ab einer Außentemperatur von 10°C vorgenommen wird, vorzugsweise im Zeitraum Februar bis Juni, insbesondere März bis Mai; oder beim Übergang vom Larvenstadium zum erwachsenen Käfer oder unmittelbar danach vorgenommen wird.
23. Verfahren nach einer der Ausführungsformen 1 bis 22, wobei das Anwenden der Zusammensetzung mit einer Anwendung eines Pflanzenschutzmittels, vorzugsweise eines Insektizids, insbesondere von Flupyradifuron oder von einem Pyrethroid, kombiniert wird.
24. Verfahren nach einer der Ausführungsformen 1 bis 23, wobei auf der landwirtschaftlichen Nutzfläche, insbesondere auf der Vorjahresrübenfläche, Winterweizen angebaut worden ist.
25. Verfahren nach einer der Ausführungsformen 1 bis 24, wobei die Fangpflanzen entweder im Herbst oder im zeitigen Frühling angebaut worden sind.
26. Verfahren zur Bekämpfung einer Rübenderbrüssler (Zuckerrübenrüssler; *Asproparthenis punctiventris)-Käferplage* bei der landwirtschaftlichen Produktion von Zuckerrüben (*Beta vulgaris ssp. vulgaris*), umfassend auf oder neben einer landwirtschaftlichen Fläche, die für den Anbau von Zuckerrüben bestimmt ist oder auf der Zuckerrüben angebaut werden, das Anwenden einer Zusammensetzung, enthaltend ein Nukleinsäuremolekül, das ein Polynukleotid umfasst, wobei eine Aufnahme des Polynukleotids durch den Rübenderbrüssler zur wirksamen Bekämpfung des Rübenderbrüsslers führt.

## Patentansprüche

1. Verfahren zur Bekämpfung eines Rüsselkäfer-Befalls, insbesondere eines Rübenderbrüssler-Befalls, bei der landwirtschaftlichen Produktion von Nutzpflanzen, für die ein Risiko einer Rüsselkäferplage besteht, insbesondere bei der landwirtschaftlichen Produktion von Zuckerrüben (*Beta vulgaris ssp. vulgaris*), für die ein Risiko eines Rüsselkäferbefalls besteht, wobei
(i) entweder eine Zusammensetzung, die ein oder mehrere Arten von Nukleinsäuremolekülen, insbesondere von Interferenz-RNA- (RNAi-)Molekülen, die den Stoffwechsel, die Entwicklung, Fortpflanzungsfähigkeit oder Überlebensfähigkeit von Rüsselkäfern (Curculionidae), insbesondere von Rübenderbrüsslern (Zuckerrübenrüssler; *Asproparthenis punctiventris*), inhibieren, auf eine landwirtschaftliche Nutzfläche aufgebracht wird; und/oder
(ii) eine Zusammensetzung, die ein oder mehrere Arten von Nukleinsäuremolekülen, insbesondere von RNAi-Molekülen, die den Stoffwechsel, die Entwicklung, Fortpflanzungsfähigkeit oder Überlebensfähigkeit von Rüsselkäfern inhibieren, auf Fangpflanzenstreifen am Rand der, in der und/ oder rund um die landwirtschaftliche Nutzfläche aufgebracht wird, wobei diese Fangpflanzenstreifen mit einer Fangpflanzendichtsaat von zumindest 50 Pflanzen/m² bepflanzt sind;
so dass die Rüsselkäfer, insbesondere die Rübenderbrüssler, mit den Nukleinsäuremolekülen, insbesondere den RNAi-Molekülen, in Kontakt kommen, so dass die Entwicklung, Fortpflanzungsfähigkeit oder Überlebensfähigkeit der Rüsselkäfer inhibiert wird.

2. Verfahren nach Anspruch 1, wobei das Nukleinsäuremolekül ein Polynukleotid umfasst, das eine Rüsselkäfer-RNAi, insbesondere eine Rübenderbrüssler-RNAi, ist, mit welcher eine dazugehörige mRNA des Rüsselkäfers, insbesondere des Rübenderbrüsslers, abgebaut wird oder deren Translation blockiert wird.

3. Verfahren nach Anspruch 1 oder 2, wobei das Nukleinsäuremolekül ein Polynukleotid umfasst, das eine Rüsselkäfer-RNAi, insbesondere eine Rübenderbrüssler-RNAi, ist, die gegen das Chitin-Synthase-Gen, gegen ein Verdauungsenzym im Rüsselkäfer, insbesondere im Rübenderbrüssler, oder gegen Gene des Rüsselkäfers, insbesondere des Rübenderbrüsslers, sind, die an den Entgiftungs- und Abwehrmechanismen des Rüsselkäfers, insbesondere des Rübenderbrüsslers, beteiligt sind.

4. Verfahren nach 1 bis 3, wobei die Zusammensetzung weiters einen Lockstoff für den Rüsselkäfer, insbesondere den Rübenderbrüssler, umfasst oder der Lockstoff in Zusammenhang mit dem Anwenden der Zusammensetzung, enthaltend das Nukleinsäuremolekül, angewendet wird.

5. Verfahren nach einem der Ansprüche 1 bis 4, wobei in der Zusammensetzung ein Lockstoff, ausgewählt aus 1R,2S-cis-1-Methyl-2-Isopropenylcyclobutaneethanol (Grandlure I: CAS No: 26532-22-9), (Z)-2-(3,3-Dimethyl)-Cyclohexylideneethanol (Grandlure II: CAS No: 26532-23-0), (Z)-(3,3-Dimethyl)-Cyclohexylidenacetaldehyd (Grandlure III: CAS No: 26532-24-1), (E)-(3,3-Dimethylcyclohexyliden)acetaldehyd (Grandlure IV: CAS No: 26352-25-2), oder Mischungen davon, insbesondere (Z)-(3,3-Dimethyl)-Cyclohexylidenacetaldehyd, (E)-(3,3-Dimethylcyclohexyliden)acetaldehyd oder eine Mischung aus (Z)-(3,3-Dimethyl)-Cyclohexylidenacetaldehyd und (E)-(3,3-Dimethylcyclohexyliden)acetaldehyd, enthalten ist.

6. Verfahren nach einem der Ansprüche 1 bis 5, wobei die Fangpflanzenstreifen mit einer Fangpflanzendichtsaat von 200 bis 500 Fangpflanzen pro m² bepflanzt sind.

7. Verfahren nach einem der Ansprüche 1 bis 6, wobei die Fangpflanze in den Fangpflanzenstreifen ausgewählt ist aus Pflanzen aus der Familie der Amaranthaceaen, vorzugsweise aus der Gattung Chenopodium, insbesondere Weißer Gänsefuß; oder aus der Gattung Beta, insbesondere Mangold oder Rote Rübe.

8. Verfahren nach einem der Ansprüche 1 bis 7, wobei die Zusammensetzung weiterhin mindestens ein Adjuvans und/oder mindestens ein Tensid und/oder mindestens ein wirksames Pflanzenschutzagens und/oder mindestens einen geeigneten Träger oder Grundstoff und/oder mindestens ein geeignetes Verdünnungsmittel umfasst, vorzugsweise wobei die Zusammensetzung zumindest ein oder mehrere Penetratoren, Sticker, und/oder klassische Netzmittel umfasst.

9. Verfahren nach einem der Ansprüche 1 bis 8, wobei das Polynukleotid nach Aufnahme durch den Rüsselkäfer, insbesondere den Rübenderbrüssler, im Rüsselkäfer, insbesondere im Rübenderbrüssler, zur Hemmung des Wachstums und/oder zum Tod und/oder zur Unfruchtbarkeit des Rüsselkäfers, insbesondere des Rübenderbrüsslers, führt.

10. Verfahren nach einem der Ansprüche 1 bis 9, wobei das Ausbringen der Zusammensetzung als Spritzbrühe mit einer Feldspritze im Rahmen einer Breitflächenapplikation erfolgt, vorzugsweise mit einer luftdruckunterstützten Feldspritze, insbesondere mit einem Druck von 3 bar oder höher.

11. Verfahren nach einem der Ansprüche 1 bis 10, wobei weiters ein oder mehrere an sich bekannte Bekämpfungs- oder Kontrollmethoden für Rüsselkäfer, insbesondere für Rübenderbrüssler, angewendet werden, vorzugsweise zumindest eine weitere chemische Kontrollmethode oder zumindest eine weitere biologische Kontrollmethode und/oder zumindest eine weitere kulturelle Maßnahme.

12. Verfahren nach einem der Ansprüche 1 bis 11, wobei das Anwenden der Zusammensetzung ab einer Außentemperatur von 8°C, bevorzugt 10°C vorgenommen wird, vorzugsweise im Zeitraum Februar bis Juni, insbesondere März bis Mai; oder beim Übergang vom Larvenstadium zum erwachsenen Käfer oder unmittelbar danach vorgenommen wird.

13. Verfahren nach einem der Ansprüche 1 bis 12, wobei das Anwenden der Zusammensetzung mit einer Anwendung eines Pflanzenschutzmittels, vorzugsweise eines Insektizids, insbesondere von Flupyradifuron oder von einem Pyrethroid, kombiniert wird.

14. Verfahren nach einem der Ansprüche 1 bis 13, wobei auf der landwirtschaftlichen Nutzfläche, insbesondere auf der Vorjahresrübenfläche, Winterweizen angebaut worden ist; und/oder wobei die Fangpflanzen entweder im Herbst oder im zeitigen Frühling angebaut worden sind.

15. Verfahren zur Bekämpfung eines Rübenderbrüssler (Zuckerrübenrüssler; *Asproparthenis punctiventris)-Käferbefalls* bei der landwirtschaftlichen Produktion von Zuckerrüben *(Beta vulgarisssp. vulgaris),* umfassend auf oder neben einer landwirtschaftlichen Fläche, die für den Anbau von Zuckerrüben bestimmt ist oder auf der Zuckerrüben angebaut werden, das Anwenden einer Zusammensetzung, enthaltend ein Nukleinsäuremolekül, das ein Polynukleotid umfasst, wobei eine Aufnahme des Polynukleotids durch den Rübenderbrüssler zur wirksamen Bekämpfung des Rübenderbrüsslers führt.
